# FASCICULE DE BREVET EUROPEEN

(11) **EP 2 608 591 B1**
(45) Date de publication et mention de la délivrance du brevet: **21.02.2018**
(21) Numéro de dépôt: 12197797.9
(22) Date de dépôt: 18.12.2012
(51) Int. Cl.: H04W 12/08, H04L 29/06, H04W 12/06

(54) **AUTO-CONFIGURATION D'UN TERMINAL MOBILE POUR LA CONNEXION À UN RÉSEAU SANS FIL SÉCURISÉ**
AUTOMATISCHE SELBSTKONFIGURATION EINES MOBILEN ENDGERÄT FÜR DIE VERBINDUNGSHERSTELLUNG MIT EINEM GESICHERTEN DRAHTLOSEN NETZ
SELF-CONFIGURATION OF A MOBILE TERMINAL FOR CONNECTING TO A SECURE WIRELESS NETWORK

(30) Priorité: 20.12.2011 FR 1162093
(43) Date de publication de la demande: 26.06.2013
(73) Titulaire: Bouygues Telecom, 75116 Paris (FR)
(72) Inventeur: Dauchy, Jérôme, 78470 Saint Rémy Lès Chevreuse (FR)
(74) Mandataire: Regimbeau

(56) Documents cités:
- US-A1- 2007 197 237
- US-A1- 2008 076 454

## Description

### DOMAINE TECHNIQUE GENERAL

La présente invention concerne le domaine des boitiers d'accès à Internet.

Plus précisément, elle concerne un procédé d'auto-configuration d'un terminal mobile, tel qu'un smartphone, pour la connexion à un réseau sans fil sécurisé.

### ETAT DE L'ART

L'accès à l'Internet est de nos jours couramment obtenu grâce à des équipements de type IAD (« Integrated Access Device ») proposés par les fournisseurs d'accès à Internet et communément appelés « box ».

Ces boitiers d'accès à Internet permettent de connecter un client du fournisseur d'accès à son réseau opérateur qui fait l'interface avec le réseau Internet. Les boitiers d'accès à Internet sont en cela des équipements de terminaison de réseau, ou « consumer edges » (CE). La connexion physique au réseau opérateur se fait le plus souvent via xDSL, câble, ou fibre optique. La plupart des boitiers d'accès à Internet embarquent des moyens d'émission/réception sans fil permettant de générer un réseau sans fil, notamment Wi-Fi, pour la connexion aisée d'équipements.

Ces équipements sont le plus souvent des ordinateurs (fixes ou portables), mais également des périphériques (imprimantes), des tablettes tactiles, et des téléphones.

Les plus récents téléphones portables, communément appelés « smartphones » (ordiphones ou téléphones intelligents en français), sont des terminaux mobiles disposant des fonctions d'un assistant numérique, et permettant un accès à Internet et de très nombreux services associés (e-mails, navigation Web, GPS, etc.). Les smartphones ont besoin d'une connexion haut débit vers l'opérateur téléphonique pour tirer parti de ces fonctionnalités, connexion aujourd'hui le plus souvent mise en oeuvre via la norme 3G (UMTS).

Bien que cette norme permette théoriquement des débits allant jusqu'à 2Mo/s, les réseaux opérateurs associés sont fréquemment engorgés. En outre, les smartphones ont occasionnellement besoin de mettre en oeuvre des téléchargements assez conséquents (parfois plusieurs centaines de Mo) par exemple pour une mise à jour ou pour l'installation d'une application.

C'est pourquoi la plupart des smartphones proposent en plus une connectivité Wi-Fi permettant d'accéder à Internet par l'intermédiaire d'un réseau privé ou d'une borne publique. De nombreux utilisateurs utilisent ainsi par exemple leur réseau sans fil personnel (généré par leur boitier d'accès Internet) pour fournir une connectivité Internet très rapide à leur smartphone lorsqu'ils sont à leur domicile.

Toutefois, les réseaux sans fil privés sont le plus souvent sécurisés afin d'éviter que des tiers à proximité du boîtier détectent et utilisent le réseau sans l'autorisation du propriétaire du boitier. C'est pourquoi la saisie d'un mot de passe est nécessaire sur le smartphone pour établir la connexion, lequel mot de passe est généralement soit fixé par l'utilisateur, soit préconfiguré sur le boitier d'accès à Internet (il est alors le plus souvent fourni à l'utilisateur inscrit sur un papier ou un autocollant présent dans l'emballage dans lequel le boitier est livré à l'utilisateur).

Pour contrer les risques de pirater le réseau par la force brute (en testant toutes les combinaisons), la longueur des mots de passe (ou « clés ») n'a de cesse de s'allonger. A titre d'exemple le protocole WPA2-PSK (Wi-Fi Protected Access 2 - Pre-Shared Key) utilise à présent des clés de 256 bits, c'est-à-dire des séquences de 64 caractères hexadécimaux.

Le problème qui apparait est la difficulté pour l'utilisateur de saisir une telle clé sans faire d'erreur (Un exemple de clé 256 bits est 44656D616E646520646520627265766574206465204D61747468696575), en particulier sur le clavier de petite taille et/ou tactile d'un smartphone.

Des alternatives à la saisie manuelle ont été proposées (notamment basées sur le protocole WPS, i.e. Wi-Fi Protected Setup), mais sont pour le moment uniquement implémentées pour ordinateur, et n'existent pas sur la majorité des smartphones. D'autres approches, basées sur l'envoi de SMS, ont été proposées. Ces approches apportent satisfaction, mais sont toujours hors de portée des néophytes. Le document US 2007/197237 A1 décrit un appareil et méthode pour fournir des informations d'identification des points d'accès aux terminaux mobiles. Il serait par conséquent souhaitable de disposer d'une nouvelle façon de transférer une clé de sécurité à un smartphone qui désire se connecter à un réseau sans fil sécurisé, qui soit à la fois simple pour l'utilisateur et parfaitement sécurisée.

### PRESENTATION DE L'INVENTION

La présente invention se rapporte ainsi selon un premier aspect à un procédé de configuration d'un terminal mobile pour la connexion à un réseau sans fil sécurisé généré par un boitier d'accès à Internet connecté à l'Internet, un équipement de notification de l'opérateur du terminal mobile étant directement connecté au boitier, le procédé étant caractérisé en ce qu'il comprend les étapes de :
- Si ledit terminal mobile est référencé comme étant associé au boitier au niveau d'une base de données de terminaux mobiles hébergée par le serveur du fournisseur d'accès, transmission d' informations de configuration dudit réseau sans fil sécurisé à l' équipement de notification de l'opérateur du terminal mobile depuis le boitier;
- Emission par l'équipement de notification, à destination du terminal mobile, d'un message contenant les informations de configuration dudit réseau sans fil sécurisé.

Selon d'autres caractéristiques avantageuses et non limitatives :
l'équipement de notification est inclus dans le boitier,
   - les informations de configuration du réseau sans fil sécurisé du boitier d'accès à Internet comprennent au moins le nom dudit réseau sans fil sécurisé, le type de sécurité et une clé de sécurité ;
   - le message émis à destination du terminal mobile est une transaction Over-The-Air via SMS,
   - la transmission est mise en oeuvre à la première utilisation du boitier et/ou à chaque modification d'au moins une information de configuration du réseau sans fil sécurisé par l'utilisateur ;
   - une interface homme-machine du serveur permet à l'utilisateur d'un boitier d'accès à Internet de modifier une liste des terminaux mobiles associés à son boitier dans la base de données de terminaux mobile.

Selon un deuxième aspect, l'invention concerne un système comprenant un serveur connecté à au moins un boitier d'accès à Internet via l'Internet, un équipement de notification connecté au serveur ou au boitier, et au moins un terminal mobile, le terminal mobile étant référencé comme étant associé au boitier au niveau d'une base de données de terminaux mobiles du serveur, le système étant configuré pour la mise en oeuvre du procédé selon le premier aspect de l'invention.

### PRESENTATION DES FIGURES

D'autres caractéristiques et avantages de la présente invention apparaîtront à la lecture de la description qui va suivre d'un mode de réalisation préférentiel. Cette description sera donnée en référence à la figure unique annexée qui représente un schéma d'une architecture de réseau pour la mise en oeuvre du procédé selon l'invention.

### DESCRIPTION DETAILLEE

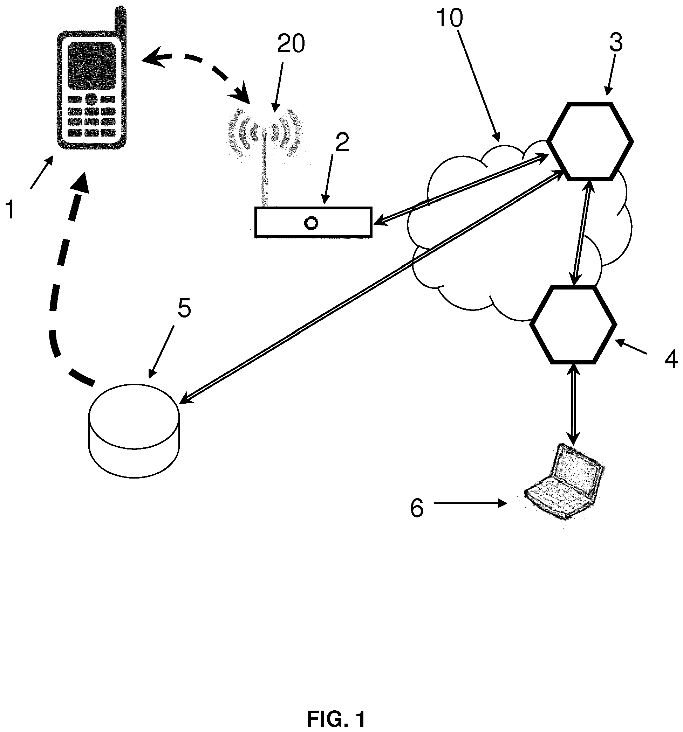

En référence à la figure 1, le procédé selon l'invention exploite un boitier d'accès à Internet 2 comprenant des moyens de communication 20 sans fil avec au moins un terminal mobile 1. Ces moyens 20 sont aptes à générer un réseau sans fil principal sécurisé. Dans la suite de la présente description, on prendra pour exemple des réseaux Wi-Fi (c'est-à-dire suivant la norme IEEE 802.11), mais on comprendra que l'invention s'applique à toute technologie sans fil. On citera notamment d'autres technologies par ondes radio telles que WiMax, le Bluetooth, la 3G, etc. Le réseau sans fil sécurisé est désigné par un SSiD (Service Set Identifier), c'est-à-dire un nom identifiant le réseau, et possède une clé de sécurité comme expliqué précédemment. Dans le cas d'un réseau Wi-Fi, la sécurisation sera mise en oeuvre en mettant l'un quelconque des mécanismes connus de l'homme du métier, mécanismes tels que WEP, WPA, WPA2, etc.

Le boitier 2 est connecté au réseau Internet 10. Cette connexion est par exemple mise en oeuvre via le xDSL, la fibre optique (FTTH) ou encore le câble (FTTLA). Au moins un serveur 3, 4 du fournisseur d'accès à Internet est lui-même connecté à l'Internet 10. Dans la suite de la présente description, on mentionnera deux serveurs 3 et 4 avantageusement distincts, mais on comprendra qu'il est tout à fait possible de les regrouper en un seul équipement.

Le terminal mobile 1 peut être compris comme tout dispositif électronique offrant des fonctions d'accès Internet et comportant à la fois des moyens de communication apte à se connecter à au moins un réseau de téléphonie mobile et des moyens alternatifs de communication sans fil compatibles avec les moyens 20 du boitier.

Le terminal mobile 1 est de façon générale un « smartphone » (ces derniers sont le plus souvent aptes à se connecter aux réseaux GPRS, EDGE, 3G, et supportent le Wi-Fi) comme expliqué précédemment, mais l'invention ne leur est pas limitée, et on comprendra que le terminal mobile peut être par exemple une tablette tactile avec une carte Sim, un ordinateur portable avec une clé 3G, etc.

Un équipement 5 est connecté au serveur 3, 4. Il s'agit d'un équipement de l'opérateur du terminal mobile 1, équipement apte à transmettre des messages au terminal 1 via un des réseaux de téléphonie mobile auquel il est connecté. Cet équipement 5 sera décrit plus en détail par la suite, mais on comprendra qu'il regroupe des moyens tel un serveur capable de créer des notifications en fonction des informations qu'il reçoit de la part du serveur 3, 4, et des moyens d'émission de messages (par exemple une antenne-relais de téléphonie mobile).

### Association boitier/terminal mobile

L'au moins un serveur 3, 4 du fournisseur d'accès à Internet (et en particulier le deuxième serveur 4) comprend des moyens de stockage (tels qu'un disque dur), sur lesquels est stockée une base de données de terminaux mobiles. Cette base de données répertorie une liste de terminaux mobiles (référencés par exemple par un numéro de téléphone, une adresse MAC, et de façon avantageuse par un numéro IMEI « International Mobile Equipment Identity », qui est un numéro qui permet d'identifier de façon unique chacun des terminaux mobiles GSM ou UMTS) associés chacun à au moins un boitier 2 du fournisseur d'accès Internet (chacun étant par exemple répertorié par son adresse IP ou un identifiant client).

L'idée est que les terminaux 1 associés à un boitier 2 au niveau de la base de données soient ceux pour lesquels on envisage la connexion au réseau sans fil sécurisé du boitier 2, par exemple les terminaux de l'usager du boitier 2 et de sa famille. Il est tout à fait possible qu'un même terminal mobile 1 soit associé à une pluralité de boitiers 2 s'il est destiné à être connecté régulièrement à leurs différents réseaux sans fil sécurisés (exemple d'une utilisation du terminal mobile au domicile et sur le lieu de travail, chacun équipé d'un boitier 2). Comme on le verra plus loin, l'association d'un terminal mobile 1 à un boitier 2 va permettre l'autoconfiguration du terminal mobile 1 pour la connexion au réseau sans fil sécurisé du boitier 2.

Avec l'apparition des offres « quadruple play », offres dans lesquelles le fournisseur d'accès Internet ajoute un service de téléphonie mobile aux services déjà fournis habituellement avec le boitier 2, il est à noter que le fournisseur d'accès à Internet (qui est alors également opérateur téléphonique) sait que le boitier 2 et le terminal mobile 1 concerné par l'offre sont destinés au même usager, et avantageusement l'association au niveau de la base de données est faite automatiquement au moment où l'usager souscrit l'offre. L'usager pourra ainsi directement se connecter au réseau sans fil de son boitier 2 sans avoir à effectuer le moindre réglage sur son terminal 1.

Alternativement aux offres quadruple play, l'invention permet avantageusement toutes sortes d'associations entre terminaux 1 et boitiers 2, y compris d'opérateurs différents, comme il sera montré plus loin.

### Procédé d'autoconfiguration

Le procédé d'autoconfiguration selon l'invention commence par une étape de première transmission. Cette étape voit la transmission des informations de configuration dudit réseau sans fil sécurisé depuis le boitier d'accès à Internet 2 (puisque c'est en effet l'entité qui les gère, ces informations pouvant éventuellement être modifiées en se connectant à un portail d'administration du boitier 2), vers le serveur 3.

Ce serveur 3 est avantageusement un serveur d'administration de boitiers d'accès Internet 2, notamment un serveur ACS (« Auto Configuration Server »). Ces serveurs sont en effet conçus pour dialoguer régulièrement avec les boitiers 2 du réseau du fournisseur d'accès pour des opérations de maintenance et suivi d'état, notamment grâce au protocole TR-069 ou tout autre protocole de communication sécurisée. La première transmission est donc avantageusement conforme au protocole TR-069.

Les informations de configuration du réseau sans fil sécurisé du boitier d'accès à Internet 2 concernée par cette transmission comprennent avantageusement au moins le nom dudit réseau sans fil sécurisé (le SSiD), le type de sécurité et la clé de sécurité. Il s'agit des informations minimales pour permettre la connexion du terminal mobile 1. D'autres informations telles que le protocole utilisé peuvent être également envoyées.

Si le terminal mobile 1 est référencé comme étant associé au boitier 2 au niveau de la base de données de terminaux mobiles du serveur 3 du fournisseur d'accès, une deuxième transmission des informations de configuration du réseau sans fil sécurisé est mise en oeuvre. Cette deuxième transmission est un transfert des informations de configuration reçues par le serveur 3, à l'équipement 5 de notifications de l'opérateur du terminal mobile 1 mentionné précédemment.

Plusieurs deuxièmes transmissions peuvent être mises en oeuvre si plusieurs terminaux mobiles sont associés au boitier 2. Il est en outre à noter que si aucun terminal mobile 1 n'est référencé comme étant associé au boitier 2 au niveau de la base de données de terminaux mobiles du serveur 3, aucune deuxième transmission n'est effectuée et les informations de configuration envoyées au serveur 3 sont perdues. Il peut être en effet souhaitable pour des questions de sécurité des utilisateurs qu'aucune clé de sécurité ne soit stockée de façon permanente sur un serveur. Le serveur 3 se contente donc de retransférer les informations de configuration.

L'étape de première transmission (et donc ensuite la deuxième transmission si possible) est avantageusement mise en oeuvre à la première utilisation du boitier 2 et/ou à chaque modification d'au moins une information de configuration du réseau sans fil sécurisé par l'utilisateur, ce qui permet que tous les terminaux mobiles 1 associés au boitier 2 soient à tout instant renseignés avec les informations les plus à jour. Alternativement, on peut envisager de déclencher cette première transmission par exemple si le terminal mobile 1 est détecté à proximité du boitier 2.

L'équipement 5 est un équipement capable d'envoyer un message au terminal mobile 1 via un réseau téléphonique. Le procédé comprend par conséquent une étape suivante d'émission à destination du terminal mobile 1 d'un message contenant les informations de configuration dudit réseau sans fil sécurisé. Ce message est avantageusement une notification, en particulier une transaction « Over-The-Air » (OTA) envoyée sous la forme d'un SMS. Les notifications OTA sont couramment employées par les opérateurs de téléphonie mobile pour mettre à jour un contenu ou introduire un nouveau service des cartes SIM à distance. Dans la méthode selon l'invention, la notification OTA permet de mettre à jour les données internes, et en particulier les informations de connexion automatique à des réseaux sans fil, du terminal mobile 1. Celui-ci est alors autoconfiguré, et pourra se connecter au réseau sans fil sécurisé généré par le boitier d'accès à Internet 2 sans aucune action de l'utilisateur. Le message émis est avantageusement chiffré, afin d'éviter des risques d'interception de la clé par des tiers.

L'invention n'est pas limitée au protocole OTA, et l'homme du métier saura utiliser des applications, par exemple basées sur Java, qui sont capables de recevoir les informations de configuration notifiées sous une forme quelconque, et de mettre à jour les données internes en conséquence.

Le procédé selon l'invention permet ainsi l'autoconfiguration de tout terminal mobile 1 pour la connexion au réseau sans fil sécurisé d'un boitier d'accès à Internet 2, et ce sans que la moindre action n'ait à être faite sur le terminal mobile 1. Le procédé est donc à la portée des néophytes. Le procédé est en outre particulièrement sécurisé, puisque le procédé est limité aux terminaux mobiles 1 renseignés dans la base de données, et est donc impossible à mettre en oeuvre pour un tiers.

### Deuxième serveur

Dans le cas de deux serveurs distincts 3 et 4, comme expliqué le premier est un serveur, en particulier ACS, de gestion des boitiers 2 du fournisseur d'accès à Internet, et le deuxième est le serveur qui héberge la base de données de terminaux mobiles 1. Dans cette configuration, la deuxième transmission le est mis en oeuvre par le premier serveur 3 sous le contrôle du deuxième serveur 4 : c'est ce dernier qui indique au premier serveur 3 qu'au moins un terminal 1 est renseigné comme associé au boitier 2 dont provient la première transmission, et que par conséquent la deuxième transmission peut être mise en oeuvre.

Il est à noter que les informations de configuration peuvent transiter par le deuxième serveur 4. C'est lui qui dans ce cas met en oeuvre les deuxièmes transmissions. Dans cette configuration, le procédé comprend une étape de transmission intermédiaire des informations de configuration du premier serveur 3 au deuxième serveur 4 entre les première et deuxième transmissions.

La présence d'un serveur 4 dédié à la base de données facilite sa gestion, et en particulier une interface homme-machine 6 du deuxième serveur 4 est avantageusement prévue. Cette interface permet par exemple à tout utilisateur d'un boitier d'accès à Internet 2 de gérer une liste des terminaux mobiles 1 associés à son boitier 2. Il peut rajouter des terminaux 1 ou en enlever. Cette interface est avantageusement particulièrement sécurisée puisque c'est le seul moyen de contrôle de la diffusion des informations de configuration du réseau sans fil sécurisé du boitier 2. Il est prévu une authentification de l'utilisateur, éventuellement complétée par exemple par des restrictions au niveau des adresses IP (possibilité de n'accepter que les connexions via un équipement connecté à l'Internet 10 au niveau du boitier 2) et/ou MAC (possibilité de n'accepter que le ou les équipements de l'utilisateur 2) via lesquelles la connexion à l'interface 6 est possible.

Toute modification de la liste au niveau de l'interface 6 se traduit par les modifications adéquates d'associations dans la base de données de terminaux mobile du serveur 4. Il est à noter qu'avantageusement tout ajout d'un terminal 1 dans cette liste redéclenche la mise en oeuvre du procédé selon l'invention, de sorte que le terminal 1 nouvellement associé puisse rapidement être configuré.

Alternativement à des mises en oeuvre du procédé selon l'invention à la première utilisation du boitier 2 et/ou à chaque modification d'au moins une information de configuration du réseau sans fil sécurisé par l'utilisateur et/ou à chaque modification de la liste de terminaux 1 associés à son boitier 2 au niveau de l'interface 6 par l'utilisateur, on peut avoir une mise en oeuvre périodique, par exemple journalière.

### Cellule femto

Les boitiers « femtocells » sont des équipements de téléphonie mobile de faible puissance, destinés à offrir une couverture réseau d'appoint (une « cellules femto ») le plus souvent pour un usage personnel. Une cellule femto se connecte au réseau de l'opérateur de téléphonie mobile via une connexion Internet haut débit, c'est-à-dire généralement un boitier d'accès à Internet 2. Le boitier femtocell est alors par exemple un module 3G directement connectée au boitier 2. Il est à noter qu'alternativement le boitier 2 peut directement inclure des moyens de génération de la cellule femto et être ainsi lui-même un boitier femtocell.

En présence d'une cellule femto au niveau du boitier 2 (que celle-ci soit générée par un équipement connecté au boitier mais distinct, ou par le boitier lui-même), les moyens de génération de la cellule femto peuvent jouer le rôle de l'équipement 5 de notification de l'opérateur du terminal mobile 1.

A cet effet, un deuxième aspect de l'invention concerne un procédé de configuration d'un terminal mobile 1 pour la connexion à un réseau sans fil sécurisé généré par un boitier d'accès à Internet 2 connecté à l'Internet 10, dans lequel un équipement 5 de notification (de type femto) de l'opérateur du terminal mobile 1 est connecté au boitier 2. Au vu de cette connexion, les informations de configuration n'ont plus besoin de transiter par un serveur externe situé sur l'Internet.

Le procédé selon le deuxième aspect de l'invention ne nécessite plus de première et deuxième transmissions, et ne comprend qu'une transmission unique du boitier 2 à l'équipement 5 si le serveur 3, 4 l'autorise (après consultation de la base de données). Ce mode de réalisation est particulièrement avantageux puisque la clé de sécurité ne sort plus du réseau local de l'utilisateur. La sécurisation du transfert est maximale.

Ce procédé comprend donc les étapes de :
- Si ledit terminal mobile 1 est référencé comme étant associé au boitier 2 au niveau d'une base de données de terminaux mobiles hébergée par un serveur 3, 4 du fournisseur d'accès, transmission d'informations de configuration dudit réseau sans fil sécurisé à l'équipement 5 de notification de l'opérateur du terminal mobile 1 depuis le boitier 2 ;
- Emission par l'équipement 5 de notification, à destination du terminal mobile 1, d'un message contenant les informations de configuration dudit réseau sans fil sécurisé.

Si l'équipement 5 de notification est inclus dans le boitier 2 (cas où le boitier 2 est un boitier femtocell), la deuxième transmission se fait d'un composant à l'autre du boitier 2, et c'est le boitier 2 qui émet lui-même le message contenant les informations de configuration dudit réseau sans fil sécurisé. Toute interception est impossible.

Tous les modes de réalisation avantageux décrits précédemment pour le procédé selon le premier aspect de l'invention s'appliquent également au procédé selon le deuxième aspect de l'invention.

### Système

Selon un troisième aspect, l'invention concerne un système. Ce système comprenant un serveur 3, 4 (et avantageusement un premier serveur 3 et un deuxième serveur 4 distinct) connecté à au moins un boitier d'accès à Internet 2 via l'Internet 10, un équipement 5 de notifications connecté au serveur 3, 4 ou au boitier 2 (cas de la cellule femto), et au moins un terminal mobile 1, le terminal mobile étant référencé comme associé au boitier 2 au niveau d'une base de données de terminaux mobiles du serveur 3, 4.

Le système met en oeuvre le procédé selon le premier ou le deuxième aspect de l'invention, ce qui permet que le terminal mobile 1, ainsi que les autres terminaux mobiles que l'utilisateur souhaiterait associer à son boitier 2, soient autoconfigurés pour la connexion au réseau sans fil sécurisé du boitier 2.

## Revendications

1. Procédé de configuration d'un terminal mobile (1) pour la connexion à un réseau sans fil sécurisé généré par un boitier d'accès à Internet (2) connecté à l'Internet (10), un équipement (5) de notification de l'opérateur du terminal mobile (1) étant directement connecté au boitier (2), le procédé étant **caractérisé en ce qu'**il comprend les étapes de :
- Si ledit terminal mobile (1) est référencé comme étant associé au boitier (2) au niveau d'une base de données de terminaux mobiles hébergée par un serveur (3, 4) du fournisseur d'accès, transmission d'informations de configuration dudit réseau sans fil sécurisé à l'équipement (5) de notification de l'opérateur du terminal mobile (1) depuis le boitier (2) ;
- Emission par l'équipement (5) de notification, à destination du terminal mobile (1), d'un message contenant les informations de configuration dudit réseau sans fil sécurisé.

2. Procédé selon la revendication 1, dans lequel l'équipement (5) de notification est inclus dans le boitier (2).

3. Procédé selon l'une des revendications précédentes, dans lequel les informations de configuration du réseau sans fil sécurisé du boitier d'accès à Internet (2) comprennent au moins le nom dudit réseau sans fil sécurisé, le type de sécurité et une clé de sécurité.

4. Procédé selon l'une des revendications précédentes, dans lequel le message émis à destination du terminal mobile (1) est une transaction Over-The-Air via SMS.

5. Procédé selon l'une des revendications précédentes, dans lequel la transmission est mise en oeuvre à la première utilisation du boitier (2) et/ou à chaque modification d'au moins une information de configuration du réseau sans fil sécurisé par l'utilisateur.

6. Procédé selon l'une des revendications précédentes, dans lequel une interface homme-machine (6) du serveur (3, 4) permet à l'utilisateur d'un boitier d'accès à Internet (2) de modifier une liste des terminaux mobiles (1) associés à son boitier (2) dans la base de données de terminaux mobile.

7. Système comprenant un serveur (3, 4) connecté à au moins un boitier d'accès à Internet (2) via l'Internet (10), un équipement (5) de notification connecté au serveur (3, 4) ou au boitier (2), et au moins un terminal mobile (1), le terminal mobile étant référencé comme étant associé au boitier (2) au niveau d'une base de données de terminaux mobiles du serveur (3, 4), le système étant configuré pour la mise en oeuvre du procédé selon l'une quelconque des revendications précédentes.

## Patentansprüche

1. Konfigurationsverfahren eines mobilen Terminals (1) für den Anschluss an ein gesichertes, drahtloses Netz, das durch einen an das Internet (10) angeschlossenen Zugangskasten zum Internet (2) generiert wird, wobei eine Benachrichtigungsausrüstung (5) des Betreibers des mobilen Terminals (1) direkt an das Gehäuse (2) angeschlossen ist, wobei das Verfahren **dadurch gekennzeichnet ist, dass** es die Schritte umfasst:
- Wenn das mobile Terminal (1) in einer von einem Server (3, 4) des Zugangsproviders beherbergten Datenbank für mobile Terminals als dem Gehäuse (2) zugeordnet referenziert ist, Übertragung von Konfigurationsinformationen des genannten gesicherten, drahtlosen Netzes auf die Benachrichtigungsausrüstung (5) des Betreibers des mobilen Terminals (1) ausgehend von dem Kasten (2);
- Versenden einer die Konfigurationsinformationen des genannten gesicherten, drahtlosen Netzes enthaltenden Nachricht an das mobile Terminal (2).

2. Verfahren gemäß Anspruch 1, bei dem die Benachrichtigungsausrüstung (5) in dem Gehäuse (2) eingeschlossen ist.

3. Verfahren gemäß einem der voranstehenden Ansprüche, bei dem die Konfigurationsinformationen des gesicherten, drahtlosen Netzes des Zugangsgehäuses zum Internet (2) wenigstens den Namen des genannten gesicherten, drahtlosen Netzes, den Sicherheitstyp und einen Sicherheitsschlüssel umfassen.

4. Verfahren gemäß einem der voranstehenden Ansprüche, bei dem die an das mobile Terminal (1) versandte Nachricht eine Transaktion Over-The-Air per SMS ist.

5. Verfahren gemäß einem der voranstehenden Ansprüche, bei dem die Übertragung bei der ersten Nutzung des Kastens (2) und / oder jeder Änderung wenigstens einer Konfigurationsinformation des gesicherten, drahtlosen Netzes durch den Nutzer umgesetzt wird.

6. Verfahren gemäß einem der voranstehenden Ansprüche, bei dem eine Schnittstelle Mensch / Maschine (6) des Servers (3, 4) dem Nutzer eines Zugangskastens zum Internet (2) die Änderung einer Liste der mobilen Terminals (1) ermöglicht,die ihrem Kasten (2) in der Datenbank von mobilen Terminals zugeordnet sind.

7. System, umfassend einen Server (3, 4), der an wenigstens ein Zugangsgehäuse zum Internet (2) über das Internet (10), eine an den Server (3, 4) oder an den Kasten (2) angeschlossene Benachrichtigungsausrüstung (5) und an wenigstens ein mobiles Terminal (1) angeschlossen ist, wobei das mobile Terminal als dem Kasten (2) an einer Datenbank von mobilen Terminals des Servers (3, 4) zugeordnet referenziert ist, wobei das System für die Umsetzung des Verfahrens gemäß irgendeinem der voranstehenden Ansprüche konfiguriert ist.

## Claims

1. Method for configuring a mobile terminal (1) for connection to a secure wireless network generated by an Internet access box (2) connected to the Internet (10), notification equipment (5) of the operator of the mobile terminal (1) being directly connected to the box (2), with the method **characterised in that** it comprises the steps of:
- If said mobile terminal (1) is referenced as being associated with the box (2) on a database of mobile terminals hosted by a server (3, 4) of the access provider, transmission of configuration information of said secure wireless network to the notification equipment (5) of the operator of the mobile terminal (1) from the box (2);
- Emission by the notification equipment (5), intended for the mobile terminal (1), of a message containing the configuration information of said secure wireless network.

2. Method according to claim 1, wherein the notification equipment (5) is included in the box (2).

3. Method according to one of the preceding claims, wherein the configuration information of the secure wireless network of the Internet access box (2) comprises at least the name of said secure wireless network, the security type and a security key.

4. Method according to one of the preceding claims, wherein the message emitted intended for the mobile terminal (1) is an Over-The-Air transaction SMS.

5. Method according to one of the preceding claims, wherein the transmission is implemented at the first use of the box (2) and/or at each modification of at least one piece of configuration information of the secure wireless network by the user.

6. Method according to one of the preceding claims, wherein a man-machine interface (6) of the server (3, 4) allows the user of an Internet access box (2) to modify a list of the mobile terminals (1) associated with his box (2) in the database of mobile terminals.

7. System comprising a server (3, 4) connected to at least one Internet access box (2) via the Internet (10), notification equipment (5) connected to the server (3, 4) or to the box (2), and at least one mobile terminal (1), with the mobile terminal being referenced as being associated with the box (2) at the level of a database of mobile terminals of the server (3, 4), with the system being configured for the implementation of the method as claimed in any preceding claim.
